# DEMANDE DE BREVET EUROPEEN

(11) **EP 4 834 669 A1**
(43) Date de publication de la demande: **04.11.2026**
(21) Numéro de dépôt: 26174897.4
(22) Date de dépôt: 27.04.2026
(51) Int. Cl.: B60R 21/231, B60R 21/2338

(54) **SIEGE DE VEHICULE AUTOMOBILE A AIRBAG INTEGRE**

(30) Priorité: 02.05.2025 FR 2504681
(71) Demandeur: Renault s.a.s, 92100 Boulogne Billancourt (FR)
(72) Inventeur: LESBATS, Fabrice, 78280 GUYANCOURT (FR); RUFFET, Renaud, 78280 GUYANCOURT (FR); LECROISEY, Sébastien, 78280 GUYANCOURT (FR)

(57) **Abrégé**

L'invention concerne un siège de véhicule automobile, comportant :
- un dossier,
- une assise qui comprend une ossature (11) équipée d'une traverse (14) avant, et
- un dispositif de retenue d'un occupant du siège qui comprend, d'une part, au moins un coussin gonflable de sécurité qui, lorsqu'il est gonflé, est adapté à se déployer sur le côté au moins de l'occupant, et, d'autre part, au moins une bride qui présente une extrémité fixée au dossier.

Selon l'invention, la traverse présente un logement (15) pour la bride qui est ouvert sur une face supérieure de la traverse.

## Description

### DOMAINE TECHNIQUE DE L'INVENTION

La présente invention concerne de manière générale la sécurité des passagers de véhicules automobiles.

Elle concerne plus particulièrement un siège pour véhicule automobile, comportant :
- un dossier,
- une assise qui comprend une ossature et, en face supérieure de l'ossature, une garniture, ladite ossature comportant, à l'opposé du dossier, une traverse, et
- un dispositif de retenue d'un occupant du siège qui comprend, d'une part, au moins un coussin gonflable de sécurité qui, lorsqu'il est gonflé, est adapté à se déployer sur le côté au moins de l'occupant, et, d'autre part, au moins une bride qui présente une extrémité fixée au dossier.

L'invention concerne également un véhicule automobile équipé d'un tel siège, ainsi qu'un procédé de fabrication d'un tel siège.

### ETAT DE LA TECHNIQUE

Actuellement, les airbags sont logés dans le volant du véhicule, dans le tableau de bord et au-dessus des fenêtres (on parle d'airbag rideau) afin de pouvoir se déployer autour du conducteur et du passager avant en cas de choc.

Les emplacements de ces airbags ne sont pas idéaux puisqu'ils occupent une place importante au sein de la planche de bord et du volant. Les airbags rideaux occupent également beaucoup de place, occasionnant des pertes de volume pour l'implantation des poignées de pavillon ou encore pour obtenir une largeur maximale de toit ouvrant.

En outre, dans le cadre de l'autonomisation des véhicules automobiles, il s'avère nécessaire de revoir cet agencement, pour tenir compte du fait que le conducteur ne se tiendra plus nécessairement face à la route, volant entre les mains, mais qu'il pourra adopter des attitudes différentes.

Dans cette perspective, une nouvelle catégorie d'airbags dits « cocoons » a commencé à être développée par la demanderesse. Il s'agit d'airbags qui viennent se positionner de part et d'autre de l'occupant.

Ainsi, on connaît notamment du document FR3131258 un siège équipé, dans chacun des deux flancs de son dossier, d'un coussin gonflable. Ces deux coussins sont prévus pour se gonfler en cas de choc de telle façon qu'ils se déploient de part et d'autre de l'occupant du siège puis devant lui.

Pour s'assurer que les deux coussins se gonflent dans la position souhaitée, ce document explique que deux sangles sont cousues sur chaque coussin. Chaque sangle présente une extrémité supérieure fixée au dossier et une extrémité inférieure fixée à l'ossature de l'assise, et plus précisément dans une zone centrale d'une traverse dite anti-sous-marinage.

En conditions normales (i.e. au repos, en l'absence d'accident), chaque sangle reste logée dans le siège, en passant pour cela le long d'un côté du dossier et de l'assise.

En pratique, si la sangle est alors principalement logée sur les bords de l'assise, son extrémité qui se rattache à la traverse anti-sous-marinage se prolonge dans une zone sur laquelle l'occupant du siège s'assiéra. Elle génère alors dans cette zone un renflement et donc un point dur dans l'assise, qui peut s'avérer gênant pour l'occupant.

Pour remédier à cela, la solution pouvant être employée serait de décaler sur le côté le point d'attache de la sangle sur l'assise. Mais cette solution s'avère contraignante.

### PRESENTATION DE L'INVENTION

Afin de remédier à l'inconvénient précité de l'état de la technique, la présente invention propose plutôt de prévoir dans l'ossature de l'assise un logement spécifique pour la bride (sangle...).

Plus particulièrement, on propose selon l'invention un siège tel que défini dans l'introduction, dans lequel la traverse de l'ossature de l'assise présente un logement qui est ouvert sur sa face supérieure et qui loge en partie la bride.

Ainsi, selon l'invention, l'extrémité de la bride peut être intégrée au sein même de la traverse, sans occasionner d'inconfort pour l'occupant. Cette bride peut ainsi être disposée sous les jambes de l'occupant sans provoquer de gêne, tant en conditions normales d'utilisation (en l'absence d'accident) qu'en cas d'accident, où elle se déploie alors sous la mousse de l'assise sans causer de blessures aux jambes de l'occupant mais au contraire en ramenant les jambes de l'occupant l'une contre l'autre, dans une attitude à privilégier.

En outre, le logement prévu dans la traverse assure un déploiement optimal de la bride et, par conséquent, un gonflement idéal des coussins gonflables de sécurité associés. Il permet notamment une réduction significative des frottements avec la garniture ainsi qu'avec la housse du siège, aussi bien en conditions normales d'utilisation qu'en cas d'accident.

Par ailleurs, le logement garantit une installation précise et efficace de la bride lors de l'assemblage du siège. Cette opération est d'autant plus simplifiée pour les opérateurs assemblant les sièges que différentes variantes de sièges peuvent comporter un logement identique, permettant ainsi une répétabilité de l'assemblage des sièges par ces opérateurs. De plus, durant toute la durée de vie du siège, ce logement assure une position stable des brides, empêchant ainsi tout déplacement dû aux mouvements du siège ou de son occupant.

Enfin, le logement peut présenter une forme spécifique contribuant avantageusement à la rigidité structurelle de la traverse.

D'autres caractéristiques avantageuses et non limitatives du siège conforme à l'invention, prises individuellement ou selon toutes les combinaisons techniquement possibles, sont les suivantes :
- la traverse comportant une paroi fine présentant une zone sensiblement plane ;
- le logement se présente sous la forme d'une ouverture traversante, de préférence située dans la zone sensiblement plane ;
- en variante, le logement est une gorge formée par un renfoncement de la traverse ;
- le logement est une gorge formée par un renfoncement de la paroi dans la zone sensiblement plane ;
- la gorge s'étend de façon rectiligne ;
- le logement s'étend sur une majeure partie de la longueur de la traverse ;
- il est prévu au moins un fourreau allongé qui s'étend au moins en partie dans le logement, qui est fixé à l'ossature de l'assise, et qui loge au moins une partie de ladite bride, ce fourreau allongé présentant sur une majeure partie de sa longueur une zone d'extraction de ladite bride ;
- il est prévu un prétensionneur fixé sous la traverse, et dont une partie mobile est attachée à une autre extrémité de la bride ;
- la partie mobile du prétensionneur est attachée à ladite autre extrémité de la bride au travers d'un orifice prévu dans la traverse, à une extrémité du logement ;
- ladite bride comporte, sur un tronçon s'étendant à partir du dossier, une sangle, et, sur un tronçon restant, une corde, le logement logeant la corde de la bride uniquement ;
- le dispositif de retenue comprend deux coussins gonflables de sécurité qui, lorsqu'ils sont gonflés, sont adaptés à se déployer de part et d'autre de l'occupant, et au moins deux brides qui sont respectivement couplées aux deux coussins gonflables de sécurité et qui, lorsque les deux coussins gonflables de sécurité ne sont pas gonflés, sont logées en partie soit dans ledit logement, soit l'une dans ledit logement et l'autre dans un autre logement ouvert sur la face supérieure de la traverse.

L'invention concerne également un véhicule automobile comportant un plancher et un siège tel que précité, monté sur le plancher.

L'invention concerne aussi un procédé de fabrication d'un siège tel que précité, selon lequel la bride est installée dans le logement avant que la garniture ne soit rapportée sur l'ossature. Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'un siège conforme à l'invention, sur laquelle les coussins gonflables de sécurité sont représentés en position déployée ;
[Fig. 2] est une vue schématique en perspective d'une traverse de l'ossature du siège de la figure 1 ;
[Fig. 3] est une vue schématique en perspective d'une coupe de la traverse de la figure 2, selon le plan A-A de la figure 2 ;
[Fig. 4] est une représentation schématique et en perspective, vue sous un autre angle, d'une coupe de la traverse de la figure 2, selon le plan B-B de la figure 2.

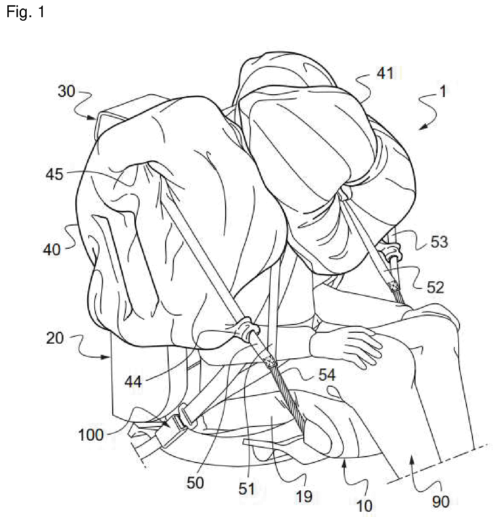

Sur la figure 1, on a représenté un siège 1 dans lequel est assis un occupant 90.

Ce siège 1 est ici installé dans l'habitacle d'une voiture. En variante, il pourrait être installé dans l'habitacle de tout autre type de véhicule automobile (camion, avion, wagon...).

Il s'agit ici du siège du conducteur de ce véhicule. Mais il pourrait aussi bien s'agir d'un autre des sièges du véhicule, notamment du siège passager (situé à côté du siège conducteur) ou même d'un siège situé à l'arrière du siège conducteur.

Dans la suite de la description, les termes « avant » et « arrière » seront utilisés par rapport au véhicule automobile, la partie avant d'un élément désignant la partie de cet élément qui est située du côté du capot du véhicule et la partie arrière désignant la partie de cet élément qui est située du côté opposé.

Les termes « inférieur » (ou « bas ») et « supérieu » (ou « haut ») seront utilisés de la même façon, la partie inférieure d'un élément désignant la partie de cet élément qui est située du côté du plancher du véhicule et la partie supérieure désignant la partie de cet élément qui est située du côté du toit du véhicule.

L'adjectif « longitudinal » s'appliquera à une direction ou un axe orienté de l'avant vers l'arrière du véhicule, parallèlement à la direction d'avance du véhicule lorsque le volant est en position neutre.

L'adjectif « transversal » s'appliquera à une direction ou un axe orienté orthogonalement aux axes longitudinaux et horizontalement lorsque le véhicule roule sur une route horizontale.

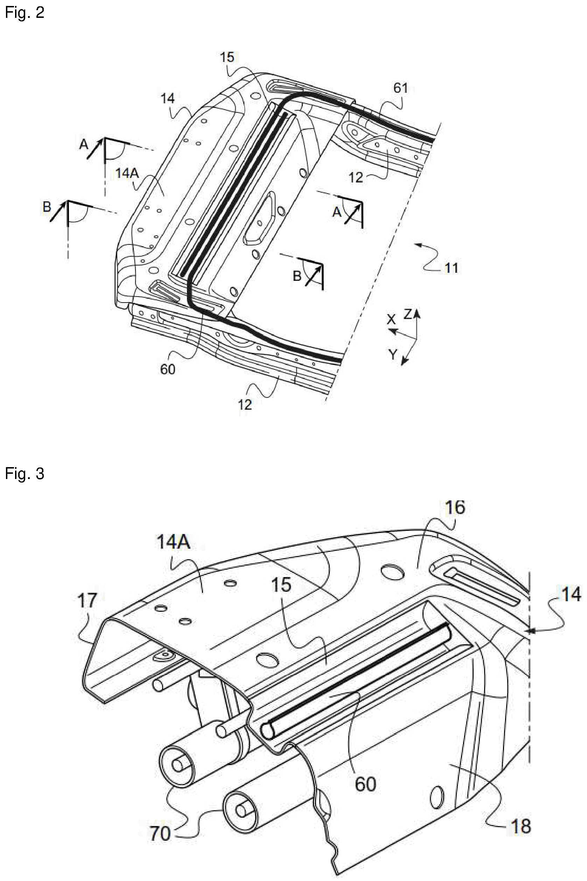

On a représenté sur la figure 2 un repère orthonormé dans lequel l'axe X est longitudinal et orienté vers l'avant, l'axe Y est transversal et orienté vers la gauche du véhicule, et l'axe Z est vertical.

Comme le montre la figure 1, le siège 1 comporte classiquement une assise 10 et un dossier 20 équipé d'un appui-tête 30. Le dossier et l'assise comprennent chacun une ossature, une garniture (ou mousse) rapportée sur l'ossature, et une housse couvrant la garniture.

La garniture du dossier et/ou de l'assise présente une partie centrale sensiblement plane, sur laquelle l'occupant peut principalement s'appuyer, et deux rebords latéraux qui sont situés de part et d'autre de la partie centrale et qui permettent de retenir l'occupant dans son siège lorsque le véhicule tourne.

L'ossature du dossier et/ou de l'assise est par exemple formée de pièces métalliques fixées ensemble.

Ici, on s'intéressera davantage à l'ossature 11 de l'assise 10. Comme le montre la figure 2, cette ossature 11 comporte dans cet exemple deux flancs latéraux 12 métalliques, connectés rigidement ensemble par des éléments de liaison métalliques. Les deux flancs latéraux 12 s'étendent dans des plans verticaux parallèles. Une nappe (non représentée) de retenue de la garniture, par exemple formée de fils métalliques entrecroisés, s'étend entre les deux flancs latéraux 12.

Parmi les éléments de liaison métalliques, il est prévu à l'arrière de l'ossature une barre transversale non visible. Il est par ailleurs prévu à l'avant une traverse dite anti-sous-marinage 14.

On rappellera ici que le sous-marinage correspond au phénomène de glissement du bassin d'un occupant sous la ceinture de sécurité lors d'un choc frontal, ce qui peut lui occasionner des blessures graves, notamment abdominales.

La traverse anti-sous-marinage 14 est donc une structure intégrée à l'assise 10, qui a pour fonction de limiter le phénomène de sous-marinage.

Cette traverse anti-sous-marinage 14 pourrait se présenter sous des formes différentes. Il s'agit ici d'une plaque métallique emboutie et fixée aux flancs latéraux 12, par exemple par rivetage, soudage ou vissage.

En pratique, cette traverse anti-sous-marinage 14 est formée par une fine paroi ici métallique, qui s'étend en longueur entre les deux flancs latéraux 12. Dans l'exemple illustré sur les figures 2 à 4, ses extrémités sont conformées pour venir chevaucher les flancs latéraux 12 afin de faciliter l'assemblage de l'ossature 11 de l'assise 10 et d'optimiser la rigidité de cette ossature. Entre ses deux extrémités (dans la zone sur laquelle les jambes de l'occupant 90 viendront reposer), la traverse anti-sous-marinage 14 comporte une paroi supérieure 16 sensiblement plane, bordée à l'avant et à l'arrière par des rebords avant 17 et arrière 18, inclinés vers le bas par rapport à cette paroi supérieure 16.

La paroi supérieure 16 et/ou le rebord arrière 18 sont inclinés vers l'arrière pour s'opposer au phénomène de sous-marinage.

Bien entendu, en variante, cette ossature 11, et notamment cette traverse anti-sous-marinage 14, pourrait se présenter autrement, par exemple sous la forme d'une coque en matière plastique fibrée.

La garniture est rapportée entre les flancs latéraux 12. Des flasques en matière plastique peuvent alors être rapportés sur les faces extérieures des flancs latéraux 12, afin de les masquer.

L'ossature du dossier 20 présente une architecture similaire, avec deux flancs latéraux métalliques, connectés rigidement ensemble par des éléments de liaison métalliques.

Le siège 1 présente différentes mobilités.

Ici, l'assise 10 est prévue pour être montée mobile en hauteur sur le plancher du véhicule et mobile d'avant en arrière sur le plancher.

Le siège 1 comporte par exemple à cet effet deux glissières et un système de rehausse standards, ici mécanique (mais qui pourrait en variante être à commande électrique).

En outre, le dossier 20 est monté sur l'ossature 11 de l'assise 10 avec une mobilité de basculement autour d'un axe transversal (l'axe Y), sur une course supérieure à 10 degrés. Il comporte des moyens de blocage et de réglage de cette mobilité, se présentant par exemple sous la forme d'une molette pivotante.

Le siège 1 est par ailleurs équipé d'un système de ceinture de sécurité 100 (Figure 1). Ce système de ceinture de sécurité pourrait être du type à deux points (avec une sangle ventrale qui s'attache de part et d'autre du bassin de l'occupant du siège) ou à trois points (avec une sangle dont une extrémité est fixée d'un premier côté du siège, au niveau de l'assise, dont l'autre s'enroule dans un enrouleur fixé au châssis du véhicule ou au dossier, de ce même premier côté, et qui s'attache par une boucle de l'autre côté du siège), voire à quatre points.

Le siège 1 est équipé d'un dispositif de retenue de l'occupant en cas de choc, c'est-à-dire d'un dispositif permettant de retenir le conducteur et d'amortir le choc qu'il ressent lorsque la voiture percute ou est percutée par un obstacle. Ici, ce dispositif de retenue est conçu pour assurer cette fonction quel que soit le type de choc (frontal, latéral, arrière, tonneaux...).

Ce dispositif de retenue est intégré au siège 1. Un avantage de cette intégration est que la position du siège dans l'habitacle (plus ou moins avancé et plus ou moins haut) est sans impact sur son fonctionnement.

Comme le montre la figure 1, le dispositif de retenue comporte au moins un système dit d'airbag. De façon très préférentielle, il en comporte deux.

Chaque système comporte au moins un coussin gonflable de sécurité, ci-après plus simplement appelé coussin 40, 41. On considérera que chaque système comporte ici un unique coussin 40, 41.

Ces deux coussins 40, 41 sont situés de part et d'autre du conducteur 20. A l'état non gonflé, ils sont en effet repliés dans les flancs du dossier. Lors de leur gonflage, ils sont prévus pour se déployer de part et d'autre de l'occupant 90 du siège 1.

Ici, ils présentent des formes différentes, l'un des coussins (côté portière) étant prévu pour se déployer à l'avant de la tête de l'occupant lorsque l'autre des coussins se déploie essentiellement sur un côté de l'occupant et devant l'une de ses épaules.

Bien entendu, en variante, les coussins pourraient présenter des formes différentes de celles illustrées sur la figure 1.

Chaque système d'airbag comporte en outre au moins une bride 50, 51, 52, 53 associée au coussin 40, 41.

Une « bride » est ici définie comme un élément allongé, souple mais non extensible selon sa longueur (ou très peu extensible, son allongement étant inférieure à 10% en cas de choc violent). Elle est de préférence réalisée par tissage ou torsion de fils en matière textile ou synthétique ou encore métallique. Une telle bride peut typiquement se présenter sous la forme d'une sangle (par exemple du type des sangles de ceinture de sécurité) ou d'une corde. Il peut ainsi par exemple s'agir d'un « strap » du type de ceux que l'on retrouve sur les airbags rideaux afin de stabiliser les zones de protection lors de leur déploiement.

La fonction de ces brides 50, 51, 52, 53 est de garantir le déploiement des coussins 40, 41 dans la position requise et/ou de retenir l'occupant 90 plaqué contre son siège 1 lors d'un choc.

Les brides 50, 51, 52, 53 sont dites « couplées » aux coussins 40, 41 en ce sens qu'elles sont cousues aux coussins et/ou qu'elles passent au travers de passants 44 fixés aux coussins ou d'ouvertures 45 prévus dans les coussins.

Une ouverture est ici définie comme une fenêtre au contour fermé pratiquée dans le coussin. Un passant 44 est pour sa part définie comme une pièce (par exemple de tissu) qui est attachée (par exemple cousue) sur l'un des coussins et qui délimite un passage pour une bride.

Ici, aucune des brides 50, 51, 52, 53 n'est cousue sur les coussins 40, 41, de façon à ce qu'elles restent libres de glisser sur les coussins.

On pourrait prévoir qu'une unique bride soit associée à chaque coussin. Toutefois, ici, chaque coussin 40, 41 est associé à deux brides 50, 51, 52, 53.

En pratique, l'une des deux brides 50, 53 associées à chaque coussin 40, 41 est prévue, lorsque ce coussin se gonfle, pour passer du côté extérieur du coussin par rapport à l'occupant 90, puis pour traverser une ouverture 45 pratiquée dans ce coussin afin de se rattacher par son extrémité supérieure à l'ossature du dossier 20. Sa fonction première est de positionner et retenir le coussin dans une position adéquate lors du choc.

L'autre des deux brides 51, 52 associées à chaque coussin est prévue pour passer entre le coussin et l'occupant 90, afin de s'appliquer contre l'épaule de l'occupant dans le but de le retenir contre le dossier 20.

Les deux brides 50, 51, 52, 53 associées à chaque coussin sont distinctes sur une partie haute de leurs longueurs. Elles se rejoignent en partie basse.

Les parties distinctes des brides sont ici formées par des sangles, alors que les parties basses communes des brides sont formées par des cordes 54 (moins encombrantes).

Autrement formulé, les deux brides 50, 51, 52, 53 associées à chaque coussin comportent une partie basse commune en corde 54, qui se subdivise en deux parties hautes se présentant sous la forme de sangles.

Bien entendu, le nombre et les formes des brides pourraient être différents de ceux illustrés sur les figures.

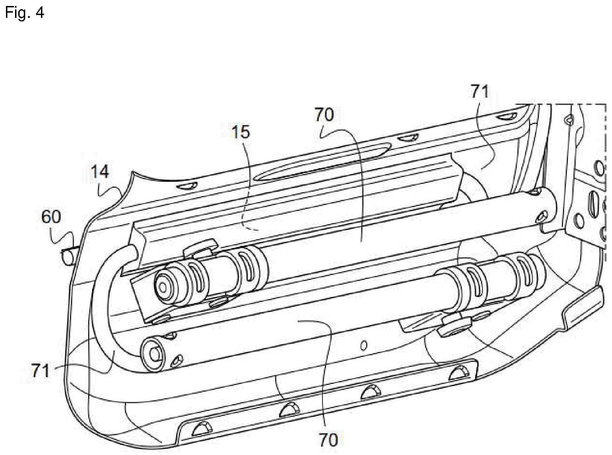

De façon préférentielle, l'extrémité basse de chaque bride est fixée à un prétensionneur 70 (visible sur la figure 4).

On rappelle ici qu'un prétensionneur, également appelé prétendeur, est un dispositif de sécurité automobile qui permet, en cas d'accident, d'exercer une traction (ici sur les brides). Un tel prétensionneur est bien connu lorsqu'il est employé à une extrémité d'une sangle de ceinture de sécurité.

Techniquement, un prétensionneur se présente généralement sous la forme d'un vérin, avec un piston qui est adapté à coulisser dans un fourreau et qui est rattaché à la corde 54 des brides, directement ou via un accessoire tel qu'un câble ou une tige métallique. Un tel prétensionneur est équipé :
- d'un système d'actionnement adapté à exercer un effort de traction sur le piston (il peut par exemple s'agir d'un ressort précontraint, d'une cartouche de gaz sous pression, ou encore d'un dispositif pyrotechnique,) et
- d'un système de déclenchement du système d'actionnement en cas d'accident (qui comprend par exemple un accéléromètre).

Les prétensionneurs sont fixés sous la traverse anti-sous-marinage 14, par exemple via des colliers vissés ou rivetés sur cette traverse.

En l'absence de choc et donc de déclenchement du gonflement des coussins 40, 41 et des prétensionneurs 70, les coussins 40, 41 restent respectivement repliés dans les deux rebords latéraux du dossier 20 du siège 1.

Les brides 50, 51, 52, 53 sont pour leur part stockées le long des rebords latéraux du dossier 20 et de l'assise 10 du siège 1.

Les brides 50, 51, 52, 53 (et en pratique ici les cordes 54 des brides) sont attachées par leurs extrémités basses aux pistons des prétensionneurs 70, du côté opposé au côté le long duquel elles sont rangées dans le dossier. Autrement dit, la corde 54 commune aux brides 50, 51 rangées d'un côté du siège croise la corde commune aux brides 52, 53 rangées de l'autre côté du siège, au niveau de l'assise 10.

Ainsi, les deux brides 50, 51 du coussin 40 gauche sont stockées le long des rebords latéraux gauche du dossier 20 et de l'assise 10, puis se prolongent (au niveau de leur partie commune en corde 54) sur la traverse 14, selon un axe transversal, sur plus de la moitié de la traverse 14.

A contrario, les deux brides 50, 51 du coussin 40 droits sont stockées le long des rebords latéraux droits du dossier 20 et de l'assise 10, puis se prolongent (au niveau de leur partie commune en corde 54) sur la traverse 14, selon un axe transversal mais dans une direction inverse, sur plus de la moitié de la traverse 14.

En pratique, les cordes 54 des brides s'étendent chacune sur plus des trois quarts de la longueur de la traverse 14.

Comme le montre la figure 1, l'objectif est qu'en cas de choc, les deux cordes forcent la garniture 19 d'assise à se replier de part et d'autre des jambes de l'occupant 90, pour ramener les deux jambes l'une contre l'autre.

Comme le montrent les figures 2 et 3, pour éviter notamment que les cordes 54 forment un renflement désagréable sous les jambes de l'occupant, la traverse 14 de l'ossature 11 de l'assise 10 présente au moins un logement 15 qui est ouvert sur une face supérieure 14A de la traverse 14.

Ce logement 15 pourrait se présenter sous la forme d'une ouverture dans la traverse 14, auquel cas les cordes 54 seraient logées dans l'épaisseur de cette ouverture.

Mais ici, et de façon préférentielle, le logement 15 se présente sous la forme d'une gorge formée par un renfoncement de la paroi de la traverse 14 à l'intérieur duquel reposent les cordes 54.

On notera ici que les cordes 54 ne sont pas visibles sur la figure 2, puisqu'en l'absence de choc, elles sont de préférence stockées dans des fourreaux 60, 61 qui seront décrits ci-après.

Le logement 15 s'étend de préférence dans la paroi supérieure 16 (dont on rappelle qu'elle forme une zone sensiblement plane). Il s'étend ici le long de la jonction entre cette paroi supérieure 16 et le rebord arrière 18.

Ce logement 15 s'étend donc en creux dans la face supérieure 14A de la paroi supérieure 16 de la traverse anti-sous-marinage 14. Autrement dit, il s'étend sous le plan de la zone plane de cette face supérieure 14A.

Si la face supérieure 14A était courbée selon une surface moyenne, le logement 15 formerait alors une concavité en creux par rapport au reste de cette surface moyenne.

Ce logement 15 en forme de gorge présente une profondeur et une largeur supérieures ou égales au diamètre de la corde 54, de façon à ce que la corde 54 puisse s'y loger sans faire saillie au-dessus de la face supérieure 14A de la traverse 14.

Il est rectiligne et s'étend en longueur selon un axe transversal.

Il est ici profilé en ce sens que ses sections (dans des plans orthogonaux à cet axe transversal) présentent des formes identiques le long de l'axe transversal.

Sa section présente une forme de U. Le logement 15 présente ainsi un fond et deux flancs. Ses deux extrémités sont de préférence fermées par des parois planes et orthogonales à l'axe transversal.

C'est au travers de ces deux parois d'extrémité que les deux cordes 54 se rattachent respectivement aux deux prétensionneurs 70.

Comme le montre la figure 4, chaque prétensionneur 70 est équipé d'un guide 71 pour la corde 54 ou pour un moyen d'attache de la corde 54 au piston. Ce guide permet, lorsque le prétensionneur est activé (en cas d'accident), de faciliter le coulissement de la corde 54 ou du moyen d'attache.

En pratique, chaque guide 71 forme une conduite, ici de section circulaire, courbée en demi-cercle. Ce guide 71 présente une extrémité fixée à l'un des prétensionneurs 70, dans l'axe du piston, et une autre extrémité fixée à l'une des parois d'extrémité planes du logement 15, au niveau d'une ouverture circulaire prévue dans cette paroi. Ainsi est-il possible de rattacher la corde 54 au piston du prétensionneur 70 qui lui est associé, directement ou indirectement.

Dans le mode de réalisation illustré sur les figures, il est prévu un unique logement 15 dans la traverse anti-sous-marinage 14. Ce logement 15 est donc prévu pour loger les deux cordes 54. Ainsi, ces cordes 54 se croisent dans le logement 15, en ce sens qu'elles s'étendent en parallèle, tête-bêche.

En variante, il pourrait être prévu deux logements distincts s'étendant en parallèle et logeant chacun l'une des cordes 54.

Ici, chaque logement 15 est formé lors de l'opération d'emboutissage de la traverse anti-sous-marinage 14. Son fond et ses flancs sont donc formés d'un seul tenant avec le reste de la traverse.

La traverse est avantageusement réalisée en matériau métallique, en particulier en acier, et notamment en acier à haute limite élastique (HLE).

Alternativement, la traverse pourrait être constituée d'une matière plastique, par exemple d'un plastique choc (par exemple en copolymère impact 500-GA20) ou d'un matériau plastique standard mais renforcé par des fibres. Dans une telle variante, le logement ne serait plus obtenu lors de l'opération d'emboutissage mais plutôt lors d'une opération de moulage par injection. Le logement serait quoi qu'il en soit formé simultanément avec le reste de la traverse et serait donc d'un seul tenant avec celui-ci.

Selon une autre variante, la traverse pourrait comporter une ouverture par exemple de forme rectangulaire, dans laquelle une pièce distincte formant le logement serait rapportée et fixée. Dans ce cas particulier, la pièce formant le logement pourrait être réalisée dans un matériau différent de celui constituant le reste de la traverse.

Pour garantir que les positions des brides soient idéales en vue de leur déploiement, le siège 1 comporte deux fourreaux allongés 60, 61 respectivement fixés sur les bords droit et gauche de l'assise 10 (pour plus de clarté, seul l'un d'entre eux est représenté en figure 3).

Ces deux fourreaux allongés 60, 61 présentent des positions symétriques par rapport à un plan de symétrie du siège 1. Ainsi, seul l'un d'entre eux sera décrit.

Ce fourreau allongé 60 est prévu pour loger les deux brides qui sont associées au coussin 40, 41 du côté duquel le fourreau se trouve.

Ce fourreau allongé 60 se présente essentiellement sous la forme d'un tube souple et profilé. On entend par là qu'il délimite un conduit dans lequel une partie au moins de chacune des deux brides peut se loger.

Ici, le fourreau présente une section transversale en forme de C dont les deux bords viennent au contact l'un de l'autre. Ainsi, en cas de choc, notamment lorsque le coussin 40, 41 se gonfle et que le prétensionneur 70 attaché aux brides correspondantes est déclenché et exerce un effort de traction sur celles-ci, ces brides peuvent sortir du fourreau allongé 60 par la fente prévue entre ces deux bords.

Ce fourreau allongé 60 est ici fixé non seulement à l'assise 10 du siège 1, mais aussi au dossier 20.

En pratique, ce fourreau allongé 60 est fixé sur le bord supérieur de l'un des flancs 12 de l'ossature 11 de l'assise 10. Il se prolonge à l'avant sur la traverse anti-sous-marinage 14, dans le logement 15. Il s'étend sur l'ensemble de la longueur du logement 15.

De façon préférentielle également, le fourreau allongé 60 se prolonge à l'arrière sur l'un des flancs de l'ossature du dossier. Ici, il ne se prolonge pas sur toute la hauteur de ce flan. En effet, il n'est pas nécessaire de protéger ces brides en partie haute du dossier, notamment car il n'y est pas prévu d'élément qui serait situé dans la zone haute de déploiement des brides et auxquels ces brides pourraient malencontreusement s'accrocher. Ce n'est bien entendu pas le cas dans la zone basse de déploiement des brides, où l'on trouve notamment les commandes manuelles et/ou électrique des mobilités du siège 1.

Le fourreau allongé 60 est alors fixé à l'ossature 11 de l'assise 10 et à celle du dossier 20. On pourrait envisager différents modes de fixation. Ainsi, le fourreau pourrait être vissé ou riveté sur ces ossatures.

Lors de l'assemblage du siège 1, on pourrait prévoir que les brides soient livrées déjà logés dans les fourreaux. Ce n'est toutefois pas ici le cas.

En pratique, les fourreaux 60 sont tout d'abord fixés aux ossatures de dossier et d'assise du siège 1, par les moyens de fixations précités (vis, rivets...).

Les brides 50, 51, 52, 53 et les prétensionneurs 70 sont ensuite rapportés sur ces ossatures. Pour cela, chaque prétensionneur est fixé sous la traverse anti-sous-marinage 14, puis les cordes 54 des brides sont ensuite engagées dans les fourreaux 60 en les faisant coulisser le long de ces derniers. Les brides peuvent ensuite être fixées en partie haute de l'ossature 21 du dossier 20, de part et d'autre de l'appui-tête 30.

Enfin, les garnitures et housses du siège sont rapportés sur les ossatures d'assise et de dossier.

En cas d'accident, lorsque les prétensionneurs 70 sont déclenchés, ils forcent les brides à coulisser dans les fourreaux 60 et à en sortir, pour qu'elles assurent leurs fonctions. En particulier, les cordes 54 des brides sont tirées au travers des ouvertures prévues aux extrémités du logement 15.

Les fourreaux et guides sont alors conçus pour réduire la friction subie par les brides lors de leur extraction. Ils permettent en outre de guider les brides pour qu'elles passent sur le côté des flasques en plastique rapportés sur les côtés du siège.

La présente invention n'est nullement limitée aux modes de réalisation décrits et représentés, mais l'homme du métier saura y apporter toute variante conforme à l'invention.

## Revendications

1. Siège (1) de véhicule automobile, comportant :
- un dossier (20),
- une assise (10) qui comprend une ossature (11) recouverte en face supérieure d'une garniture (19), ladite ossature (11) comportant, à l'opposé du dossier (20), une traverse (14), et
- un dispositif de retenue d'un occupant (90) du siège (1) qui comprend, d'une part, au moins un coussin gonflable de sécurité (40, 41) qui, lorsqu'il est gonflé, est adapté à se déployer sur le côté au moins de l'occupant (90), et, d'autre part, au moins une bride (50, 51, 52, 53) qui présente une extrémité fixée au dossier (20), **caractérisé en ce que** la traverse (14) de l'ossature (11) de l'assise (10) présente un logement (15) qui est ouvert sur une face supérieure (14A) de la traverse (14) et qui loge en partie la bride (50, 51, 52, 53).

2. Siège (1) selon la revendication 1, dans lequel le logement (15) est une gorge formée par un renfoncement de la traverse (14).

3. Siège (1) selon la revendication 2, dans lequel la gorge s'étend de façon rectiligne.

4. Siège (1) selon l'une des revendications 1 à 3, dans lequel le logement (15) s'étend sur une majeure partie de la longueur de la traverse (14).

5. Siège (1) selon l'une des revendications 1 à 4, dans lequel il est prévu au moins un fourreau allongé (60, 61) qui s'étend au moins en partie dans le logement (15), qui est fixé à l'ossature (11) de l'assise (10), et qui loge au moins une partie de ladite bride (50, 51, 52, 53), ce fourreau allongé (60, 61) présentant sur une majeure partie de sa longueur une zone d'extraction de ladite bride (50, 51, 52, 53).

6. Siège (1) selon l'une des revendications 1 à 5, dans lequel il est prévu un prétensionneur (70) fixé sous la traverse (14), et dont une partie mobile est attachée à une autre extrémité de la bride (50, 51, 52, 53).

7. Siège (1) selon la revendication 6, dans lequel la partie mobile du prétensionneur (70) est attachée à ladite autre extrémité de la bride (50, 51, 52, 53) au travers d'un orifice prévu dans la traverse (14), à une extrémité du logement (15).

8. Siège (1) selon l'une des revendications 1 à 7, dans lequel ladite bride (50, 51, 52, 53) comporte, sur un tronçon s'étendant à partir du dossier (20), une sangle, et, sur un tronçon restant, une corde (54), le logement (15) logeant la corde de la bride (50, 51, 52, 53) uniquement.

9. Siège (1) selon l'une des revendications 1 à 8, dans lequel le dispositif de retenue comprend :
- deux coussins gonflables de sécurité (40, 41) qui, lorsqu'ils sont gonflés, sont adaptés à se déployer de part et d'autre de l'occupant (90), et
- au moins deux brides (50, 51, 52, 53) qui sont respectivement couplées aux deux coussins gonflables de sécurité (40, 41) et qui, lorsque les deux coussins gonflables de sécurité (40, 41) ne sont pas gonflés, sont logées en partie soit dans ledit logement (15), soit l'une dans ledit logement (15) et l'autre dans un autre logement ouvert sur la face supérieure (14A) de la traverse (14).

10. Véhicule automobile comportant un plancher, **caractérisé en ce qu'**il comporte un siège (1) conforme à l'une des revendications 1 à 9, monté sur le plancher.

11. Procédé de fabrication d'un siège (1) conforme à l'une des revendications 1 à 9, selon lequel la bride (50, 51, 52, 53) est installée dans le logement (15) avant que la garniture (19) ne soit rapportée sur l'ossature (11).
